# EUROPÄISCHE PATENTANMELDUNG

(11) **EP 4 335 618 A1**
(43) Veröffentlichungstag der Anmeldung: **13.03.2024**
(21) Anmeldenummer: 23195972.7
(22) Anmeldetag: 07.09.2023
(51) Int. Cl.: B29C 49/46, B29C 49/12, B29C 49/36, B29C 49/42, B29C 49/78, B29C 49/24

(54) **VORRICHTUNG UND VERFAHREN ZUM UMFORMEN VON KUNSTSTOFFVORFORMLINGEN ZU KUNSTSTOFFBEHÄLTNISSEN MIT REINRAUM**

(30) Priorität: 09.09.2022 DE 102022123064
(71) Anmelder: Krones AG, 93073 Neutraubling (DE)
(72) Erfinder: Dorrmann, Beate, 93073 Neutraubling (DE); Winzinger, Frank, 93073 Neutraubling (DE); Peter, Daniel, 93073 Neutraubling (DE); Zinkl, Alexandra, 93073 Neutraubling (DE); Geltinger, Florian, 93073 Neutraubling (DE); Soellner, Juergen, 93073 Neutraubling (DE); Wittmann, Christian, 93073 Neutraubling (DE)
(74) Vertreter: Bittner, Bernhard

(57) **Zusammenfassung**

Vorrichtung (1) zum Umformen von Kunststoffvorformlingen (10) zu Kunststoffbehältnissen (15) mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen und wobei die Vorrichtung (1) eine Zuführeinrichtung (62) aufweist, um der Transporteinrichtung (2) umzuformende Kunststoffvorformlinge (10) zuzuführen sowie eine Abführeinrichtung (64), um umgeformte Behältnisse (15) von der Transporteinrichtung (2) abzuführen, und wobei die Vorrichtung einen Reinraum (8) aufweist, innerhalb dessen die Kunststoffvorformlinge (10) oder die Kunststoffbehältnisse (10) wenigstens abschnittsweise transportiert werden
dadurch gekennzeichnet, dass die Vorrichtung (1) eine Ausschleuseeinrichtung (60) aufweist, um Kunststoffvorformlinge oder Kunststoffbehältnisse aus dem Transportpfad auszuschleusen.

## Beschreibung

Die vorliegende Erfindung bezieht sich auf eine Vorrichtung und ein Verfahren zum Umformen von Kunststoffvorformlingen zu Kunststoffbehältnissen und insbesondere Kunststoffflaschen. Derartige Vorrichtungen und Verfahren sind aus dem Stand der Technik seit langem bekannt. Dabei werden Kunststoffvorformlinge zunächst erwärmt und anschließend in einer Umformungseinrichtung wie beispielsweise einer Streckblasmaschine zu den Behältnissen umgeformt. In jüngerer Zeit sind Vorrichtungen und Verfahren bekannt geworden, bei denen dieser Umformungsvorgang unter sterilen Bedingungen abläuft.

So beschreibt die WO 2021/239936 A1 eine derartige Vorrichtung zum Herstellen von Kunststoffbehältnissen. Dabei ist bei der Zuführung der Kunststoffvorformlinge ein Reinraum ausgebildet, innerhalb dessen die Kunststoffvorformlinge transportiert werden. Daneben ist eine Sterilisationseinrichtung vorgesehen, welche die Kunststoffvorformlinge nach ihrer Erwärmung sterilisiert. Weiterhin ist eine Sterilluftquelle vorgesehen, welche die Behältnisse entlang ihres Transportpfads mit Sterilluft beaufschlagt.

Damit erlaubt diese Vorrichtung die Herstellung von Kunststoffbehältnissen unter sterilen Bedingungen. Allerdings sind die hierfür nötigen Maßnahmen relativ aufwendig.

Der vorliegenden Erfindung liegt daher die Aufgabe zugrunde, derartige Vorrichtungen und Verfahren einfacher zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die umzuformenden Kunststoffvorformlinge entlang eines vorgegebenen Transportpfads transportiert. Dabei weist die Transporteinrichtung einen drehbaren Transportträger auf, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umformbar sind. Weiterhin weisen die Umformungsstationen jeweils Beaufschlagungseinrichtungen auf, um die Kunststoffvorformlinge mit dem fließfähigen Medium zu beaufschlagen.

Daneben weist die Vorrichtung eine Zuführeinrichtung auf, um der Transporteinrichtung umzuformende Kunststoffvorformlinge zuzuführen sowie eine Abführeinrichtung, um umgeformte Behältnisse von der Transporteinrichtung abzuführen.

Weiterhin weist die Vorrichtung einen Reinraum auf, innerhalb dessen die Kunststoffvorformlinge wenigstens abschnittsweise transportiert werden. Bevorzugt sind wenigstens die von der Zuführeinrichtung transportierten Kunststoffvorformlinge und/oder die von der Abführeinrichtung transportierten Kunststoffvorformlinge innerhalb dieses Reinraums angeordnet.

In einer bevorzugten Ausführungsform weist die Vorrichtung eine Ausschleuseeinrichtung auf, um Kunststoffvorformlinge oder Kunststoffbehältnisse aus dem Transportpfad auszuschleusen.

Bevorzugt ist der Reinraum derart ausgestaltet, dass die Kunststoffvorformlinge wenigstens bereichs- bzw. abschnittsweise während ihrer Expansion außerhalb des Reinraums transportiert werden.

Bevorzugt ist der Reinraum derart ausgestaltet, dass die Kunststoffvorformlinge wenigstens zeitweise während ihrer Expansion außerhalb des Reinraums transportiert werden.

Bei einer weiteren bevorzugten Ausführungsform ist ein Bereich außerhalb des Reinraums, insbesondere der Bereich, in welchem die Umformungsstationen angeordnet sind, mit einer geringen Konzentration an Sterilisationsmedium beaufschlagbar.

Das heißt nicht zwingend, dass während des Transports keine Reinraumatmosphäre um die Kunststoffvorformlinge vorhanden ist, sondern lediglich, dass Außenseiten der Blasformeinrichtungen zeit- bzw. bereichs- bzw. abschnittsweise nicht im Reinraum angeordnet sind.

Bevorzugt setzt sich der Transportpfad aus mehreren Abschnitten zusammen. In einem ersten Abschnitt des Transportpfads werden die Kunststoffvorformlinge von der Zuführeinrichtung dem Transportträger zugeführt, in einem zweiten Abschnitt werden die Kunststoffvorformlinge in den Umformungsstationen zu den Kunststoffbehältnissen umgeformt und in einem dritten Abschnitt werden die umgeformten Kunststoffbehältnisse von der Abführeinrichtung abgeführt (insbesondere nach den Übernahmen von den Umformungsstationen).

Bei einer bevorzugten Ausführungsform weisen die Zuführeinrichtung und/oder die Abführeinrichtung einen drehbaren Transportträger mit einer Vielzahl von Halteeinrichtungen zum Halten der Kunststoffvorformlinge auf. Bei dieser Ausgestaltung sind die Zuführeinrichtung und/oder die Abführeinrichtung und insbesondere beide als Transportsterne oder Transporträder ausgebildet.

Die Halteeinrichtungen können als Klammern ausgebildet sein. Die können die Behälter zumindest im Mündungsbereich ergreifen und Halten. Die Klammern können zwei Zangenarme aufweisen, welche zur Entgegennahme und Abgabe von Vorformlingen oder fertiggeblasenen Behältern öffenbar und zum Ergreifen und zum Transport dieser schließbar sind.

Bevorzugt ist wenigstens der Transportträger der Zuführeinrichtung und/oder der Transportträger der Abführeinrichtung und bevorzugt beide Transportträger innerhalb des Reinraums angeordnet.

Besonders bevorzugt weist die Vorrichtung eine Erwärmungseinrichtung zum Erwärmen der Kunststoffvorformlinge auf, welche in der Transportrichtung vor der eigentlichen Umformungseinrichtung angeordnet ist.

Besonders bevorzugt weist die Vorrichtung eine Fülleinrichtung zum Befüllen der hergestellten Kunststoffbehältnisse auf.

Besonders bevorzugt ist ein Innendruck in einem Bereich der Zuführeinrichtung und/oder in einem Bereich der Abführeinrichtung höher als in einem Bereich der Umformungseinrichtung und/oder der Erwärmungseinrichtung. So können beispielsweise dieser entsprechende Raum oder die entsprechenden Räume, in denen die Kunststoffvorformlinge zugeführt werden oder in denen Kunststoffbehältnisse abgeführt werden mit einem höheren Innendruck beaufschlagt werden. Dieser Raum ist bevorzugt der oben erwähnte Reinraum, der daher mit dem genannten Überdruck beaufschlagt ist.

Besonders bevorzugt ist ein Druck in der Erwärmungseinrichtung gleich oder niedriger als in einem Transportbereich, in dem die Kunststoffvorformlinge zu der Umformungseinrichtung transportiert werden. Besonders bevorzugt liegt ein Druckunterschied zwischen 0,5 Pa und 20 Pa, bevorzugt zwischen 2 Pa und 20 Pa und besonders bevorzugt zwischen 6 Pa und 18 Pa und besonders bevorzugt zwischen 8 Pa und 15 Pa.

Besonders bevorzugt ist jedoch ein Innendruck in der Erwärmungseinrichtung größer als ein Umgebungsdruck.

Bei einer bevorzugten Ausführungsform ist wenigstens eine Antriebseinrichtung zum Antreiben der Transporteinrichtung außerhalb des Reinraums angeordnet. Diese Anordnung außerhalb des Reinraums kann dadurch erreicht werden, dass beispielsweise ein Antrieb außerhalb des Reinraums angeordnet ist und eine Welle in den Reinraum führt. Die Anordnung außerhalb des Reinraums wäre jedoch auch dadurch möglich, dass zwar die gesamte Transporteinrichtung innerhalb des Reinraums ist, aber beispielsweise Antriebe und dergleichen wiederum gegenüber dem Reinraum abgekapselt sind.

Bei einer bevorzugten Ausführungsform ist wenigstens eine Antriebseinrichtung zum Antreiben der Zuführeinrichtung und/oder der Abführeinrichtung außerhalb des Reinraums angeordnet. Diese Anordnung außerhalb des Reinraums kann dadurch erreicht werden, dass beispielsweise ein Antrieb außerhalb des Reinraums angeordnet ist und eine Welle in den Reinraum führt. Die Anordnung außerhalb des Reinraums wäre jedoch auch dadurch möglich, dass zwar die gesamte Transporteinrichtung innerhalb des Reinraums ist, aber beispielsweise Antriebe und dergleichen wiederum gegenüber dem Reinraum abgekapselt sind. Zwischen der Antriebseinrichtung zum Antreiben der Zuführeinrichtung und/oder der Abführeinrichtung und dem Reinraum kann eine Dichtung angeordnet sein, welche z.B. ein elastisches Material aufweisen kann.

Bei einer vorteilhaften Ausführungsform kann die Beaufschlagungseinrichtung ständig außerhalb des Reinraums angeordnet sein, also z.B. während einer vollständigen Umdrehung des Transportträgers.

Bei einer weiteren vorteilhaften Ausführungsform weist die Vorrichtung eine weitere Beaufschlagungseinrichtung auf, welche die Kunststoffvorformlinge in denjenigen Bereichen, in denen sie von der Erwärmungseinrichtung zu der Umformungseinrichtung transportiert werden, wenigstens abschnittsweise und bevorzugt vollständig mit einem Sterilisationsmittel beaufschlagt.

Insbesondere kann es sich hierbei um Wasserstoffperoxid (H2O2) handeln. Besonders bevorzugt wird dabei eine permanente Beaufschlagung der Kunststoffvorformlinge mit einer geringen Konzentration an Wasserstoffperoxid vorgesehen. Dies kann beispielsweise dadurch erreicht werden, dass in den besagten Räumen, in denen die Kunststoffvorformlinge transportiert werden, die Atmosphäre permanent mit einem Sterilisationsmittel und insbesondere mit Wasserstoffperoxid beaufschlagt bzw. angereichert ist.

Bevorzugt weist die Vorrichtung wenigstens eine innerhalb des Reinraums angeordnete Druckmesseinrichtung auf. Bevorzugt weist die Vorrichtung wenigstens eine in einem Bereich der Erwärmungseinrichtung angeordnete Druckmesseinrichtung auf.

Bei einer weiteren bevorzugten Ausführungsform weist die Vorrichtung wenigstens eine Sensoreinrichtung auf, welche einen Anteil eines Sterilisationsmittels, insbesondere innerhalb des Reinraums bestimmt.

Bevorzugt ist der Reinraum derart ausgebildet, dass die von den Zufuhreinrichtung und/oder der Abführeinrichtung transportierten Kunststoffvorformlinge durch diesen Reinraum transportiert werden. Es wird also hier vorgeschlagen, dass auch der Transport der Kunststoffvorformlinge und/oder der Kunststoffbehältnisse durch den besagten Reinraum erfolgt.

Bei einer weiteren bevorzugten Ausführungsform ist der Reinraum derart ausgestaltet, dass die Kunststoffvorformlinge wenigstens zeitweise während ihrer Expansion außerhalb des Reinraums transportiert werden. Die Umformungseinrichtung selbst nimmt einen sehr gro-ßen Platz in Anspruch und entsprechend ist in diesem Bereich ein Reinraum nur schwer aufrechtzuerhalten.

Bei einer bevorzugten Ausführungsform weist die Vorrichtung eine Sterilisationseinrichtung zum Sterilisieren und/oder eine Reinigungseinrichtung zum Reinigen der Kunststoffvorformlinge und/oder Kunststoffbehältnisse auf. Bei der Reinigungseinrichtung handelt es sich bevorzugt um einen Rinser, der die Kunststoffvorformlinge oder Kunststoffbehältnisse mit einem fließfähigen Medium beaufschlagt, insbesondere mit Luft und insbesondere mit ionisierter Luft. Bevorzugt weist die Reinigungseinrichtung eine lonisierungseinrichtung zum Ionisieren von Luft auf.

Bei einer weiteren bevorzugten Ausführungsform weist die Vorrichtung eine Sterilisationseinrichtung zum Sterilisieren und/oder eine Reinigungseinrichtung zum Reinigen der Kunststoffvorformlinge und/oder der Kunststoffbehältnisse auf wobei bevorzugt die Sterilisationseinrichtung und/oder Reinigungseinrichtung stromaufwärts der Umformungseinrichtung und besonders bevorzugt stromaufwärts der Erwärmungseinrichtung (d.h. der Erwärmungseinrichtung zum Erwärmen der Kunststoffvorformlinge angeordnet ist.

Bei einer weiteren bevorzugten Ausführungsform ist die Reinigungseinrichtung an einem Einlaufstern zur Erwärmungseinrichtung angeordnet.

Insbesondere ist eine derartige Sterilisationseinrichtung bevorzugt auch in demjenigen Bereich der Vorrichtung vorgesehen, in dem die Kunststoffvorformlinge umgeformt werden und/oder in einem Bereich des Transportträgers, an dem die Umformungsstationen angeordnet sind. Damit ist eine derartige Sterilisationseinrichtung bevorzugt auch in einem Bereich eines Blasrades vorgesehen.

Bei einer weiteren bevorzugten Ausführungsform weist die Vorrichtung eine weitere Beaufschlagungseinrichtung auf, welche die Kunststoffvorformlinge während ihrer Expansion mit einem Sterilisationsmedium beaufschlagt. Bevorzugt handelt es sich hier um die gleiche Beaufschlagungseinrichtung, welche die Kunststoffvorformlinge mit dem fließfähigen Medium zu deren Expansion beaufschlagt. So wäre es möglich, dass der Blasluft, welche die Kunststoffvorformlinge expandiert, eine gewisse Menge an Sterilisationsmittel zugesetzt wird.

Daneben wäre es denkbar, eine derartige Sterilisationseinrichtung in einen Transferbereich vorzusehen, in dem Kunststoffvorformlinge dem Blasrad zugeführt werden oder in dem Behältnisse von dem Blasrad abgeführt werden.

Bei einer weiteren bevorzugten Ausführungsform weist die Vorrichtung wenigstens drei Druckluftreservoirs auf, welche Druckluft unter unterschiedlichen Drücken an die Umformungsstationen zur Verfügung stellen. Bevorzugt sind diese Druckluftreservoirs als Ringkanäle ausgeführt.

Bevorzugt sind diese Druckluftreservoirs mit Sterilluft gefüllt oder füllbar. Bei einer weiteren bevorzugten Ausführungsform ist wenigstens eines dieser Druckluftreservoirs auch mit einem Sterilisationsmittel befüllbar. Hierbei kann es sich bevorzugt um das das Druckluftreservoir handeln, welches mit der niedrigsten Druckstufe gefüllt ist.

Zur Expansion der Kunststoffvorformlinge werden bevorzugt mehrere Druckstufen verwendet, beispielsweise ein Vorblasdruck P1, ein Zwischenblasdruck Pi und ein Fertigblasdruck P2.

Bei einer bevorzugten Ausführungsform ist oberhalb der Behältnisse und/oder der Umformungsstationen ein Kanal vorgesehen, der eine Sterilluftzufuhr bewirkt. Dies ist insbesondere in dem Bereich der Transporteinrichtung bzw. des Blasrades vorgesehen. In diesem Bereich ist bevorzugt kein Reinraum vorgesehen. Durch diese Ausgestaltung ist es möglich, Kunststoffvorformlingen, die über insbesondere kurze Strecken hinweg außerhalb des Reinraums transportiert werden, Sterilluft zuzuführen, sodass in diesem Bereich keine Verkeimungen auftreten. Hierbei handelt es sich insbesondere um diejenige Strecke, in denen die Kunststoffvorformlinge von der Zuführeinrichtung zu der Transporteinrichtung transportiert werden oder diejenige Strecke, in denen die umgeformten Behältnisse von der Transporteinrichtung zu der Abführeinrichtung transportiert werden.

Bevorzugt weist die Vorrichtung eine Verschließeinrichtung, z.B. eine Tür, auf, um den Reinraumbereich abzuschließen, insbesondere im Rahmen eines Sterilisationsmodus. Diese Verschließeinrichtung kann in einem Sterilisationsmodus insbesondere eine Öffnung abdecken, durch welche hindurch Kunststoffvorformlinge von der Zuführeinrichtung an die Transporteinrichtung (z.B. das Blasrad) übergeben werden.

Dabei ist besonders bevorzugt eine derartige Türe verschieb- oder drehbar, um den Reinraum abzuschließen.

Bevorzugt ist ein Antrieb für eine derartige Türe in demjenigen Bereich vorgesehen, in dem sich auch das Blasrad befindet und bevorzugt damit in einem unsterilen Bereich.

Besonders bevorzugt ist eine Schleuse vorgesehen, durch welche die Kunststoffbehältnisse bzw. die Kunststoffvorformlinge aus dem Reinraum in den Blasradbereich transportiert werden. Eine derartige Schleuse könnte beispielsweise ein gebogenes, flächiges Element aufweisen, welches an eine Gestalt einer weiteren Einrichtung der Vorrichtung wie etwa an einen Formträger und Blasdüsendurchlaufkorridor angepasst ist.

Weiterhin wäre es auch denkbar, dass eine derartige Öffnung bzw. eine Tür in ein Blasmodul bzw. die Umformungseinrichtung hineinragt.

Auf diese Weise wird eine Zufuhr des Kunststoffvorformlings im unsterilen Bereich sehr kurz gehalten.

Die Blasformeinrichtungen können eine oder mehrere (z.B. bei sog. Doppelkavitäten) Blasformen aufweisen.

Dieser Abwandlung liegt die Idee zugrunde, dass der Kunststoffvorformling während der eigentlichen Expansion innerhalb einer Blasform angeordnet ist und daher jedenfalls annähernd sterile Bedingungen herrschen. Damit ist der kritische Bereich derjenige Bereich, in dem der Kunststoffvorformling an die Blasformen übergeben wird.

Die hier beschriebenen Ausgestaltungen sollen genau diesen Raum besonders kurz halten.

Bei einer weiteren bevorzugten Ausführungsform weist die Vorrichtung eine Spüleinrichtung zum Spülen der Kunststoffvorformlinge mittels Sterilluft auf. Diese Spüleinrichtung könnte dabei in einem Bereich der Zuführeinrichtung vorgesehen sein.

Bei einer weiteren vorteilhaften Ausführungsform wäre es möglich, dass der Kunststoffvorformling während seiner Expansion oder davor oder danach mittels steriler Luft gespült wird. Dies kann beispielsweise mit einer Blasdüse auch nach dem Abheben derselben mit dem gedrosselten Druck erreicht werden. Weiterhin ist es hierzu denkbar, dass in einem Ventilblock der Umformungsstationen ein weiteres Ventil oder auch ein Proportionalventil eingesetzt wird, um eine derartige Spülung durch die Blasdüse zu bewirken.

Bevorzugt weisen die einzelnen Umformungsstationen jeweils Ventileinheit, insbesondere sog. Ventilblöcke auf, welche eine Vielzahl von Ventilen aufweisen, um die Kunststoffvorformlinge mit den oben genannten unterschiedlichen Druckstufen zu beaufschlagen.

Weiterhin wäre es denkbar, zwischen der besagten Schleuse, über welche die Kunststoffvorformlinge dem Blasrad zugeführt werden, eine Dichtung vorzusehen, die zwischen dem Formträger und/oder der Blasdüse und dieser Schleuse besteht

Einer weiteren vorteilhaften Ausführungsformen ist eine Zuführeinrichtung vorgesehen, welche ein zusätzliches Gas wie beispielsweise flüssigen Stickstoff oder H₂O₂ in die Behältnisse einführt bzw. eindüst, um in dem Behältnis vor dem Abheben der Beaufschlagungseinrichtung wie etwa einer Blasdüse und bis zum Erreichen der sterilen Zone einen Überdruck aufrechtzuerhalten.

Zusätzlich oder alternativ wäre es auch möglich, dass neben oder seitlich oder oberhalb der Mündung der Behältnisse, insbesondere der Kunststoffvorformlinge eine Absaugeinrichtung vorgesehen ist, welche Gas absaugt, um auf diese Weise sauberere Bedingungen aufrechtzuerhalten.

Bei einer bevorzugten Ausführungsform ist die Ausschleuseeinrichtung außerhalb des Reinraums angeordnet. So kann die Ausschleuseeinrichtung beispielsweise im Bereich des Blasrads vorgesehen sein, beispielsweise in einem Bereich, in dem der Kunststoffvorformling an eine Blasform übergeben werden soll. Diese Ausgestaltung ist vorteilhaft, da eine Ausschleusung nicht durch eine Sterilraumgrenze hindurch erfolgen muss. Daneben wäre es auch möglich, die Ausschleuseeinrichtung in einem Bereich vorzusehen, in dem die umgeformten Behältnisse von dem Blasrad an die Abführeinrichtung übergeben werden.

Bevorzugt ist eine Schleusenöffnung, durch welche die Kunststoffvorformlinge oder die Behältnisse aus ihren Reinräumen heraus oder in diese hinein geführt werden an eine Gestalt der Behältnisse angepasst. Auf diese Weise kann die Öffnung sehr gering gehalten werden.

Weiterhin wäre es auch möglich, dass eine Schwenkeinrichtung vorgesehen ist, welche die Behältnisse oder Kunststoffvorformlinge für den Durchgang durch diese Trennwand schwenkt, beispielsweise um 90°, um auf diese Weise zu erreichen, dass die Öffnung einen kleinstmöglichen Querschnitt aufweist.

Bei einer bevorzugten Ausführungsform ist eine Öffnung, durch welche der Kunststoffvorformling oder die Kunststoffvorformlinge durchgeführt werden, anpassbar und insbesondere auf unterschiedliche Behältnisse oder Kunststoffvorformlinge anpassbar. Besonders bevorzugt ist eine Querschnittsfläche dieser Durchgangsöffnung weniger als doppelt so groß, als die Querschnittsfläche des Kunststoffvorformlinge oder der Behälter, bevorzugt weniger als 1,8 mal so groß, bevorzugt weniger als 1,5 mal so groß und besonders bevorzugt weniger als 1,4mal so groß.

Bei einer weiteren vorteilhaften Ausführungsform weist die Vorrichtung eine Abtrenneinrichtung auf, um eine Befüllungseinrichtung von der Umformungseinrichtung zu trennen. So kann beispielsweise ein Schott vorgesehen sein, welches insbesondere während eines Sterilisationsvorgangs geschlossen wird. Dabei ist es möglich, eine Transporteinrichtung wie etwa einen Transportstern entfernen zu bzw. wegzufahren.

Bei einer weiteren vorteilhaften Ausführungsform weist die Vorrichtung eine Sterilisations- und/oder Reinigungseinrichtung zum Sterilisieren und/oder Reinigen der die Kunststoffvorformlinge behandelnden Elemente auf. Bei diesen die Kunststoffvorformlinge oder die Kunststoffbehältnisse behandelnden Elementen handelt es sich insbesondere um solche Elemente, welche mit den Kunststoffvorformlingen oder den Kunststoffbehältnissen in Kontakt treten.

Bevorzugt sind diese Elemente ausgewählt aus einer Gruppe von Elementen, welche Blasformen, Reckstangen, Blasdüsen, Halteklammern und dergleichen enthält.

Bevorzugt weist die Vorrichtung eine Reckeinrichtung auf, welche die zu expandierenden Kunststoffvorformlinge während ihres Umfangsvorgangs in ihrer Längsrichtung expandiert. Bevorzugt weist diese Reckeinheit eine Reckstange auf, welche in die Kunststoffvorformlinge einführbar ist. Dabei ist besonders bevorzugt wenigstens ein Antrieb dieser Reckeinheit außerhalb des Reinraums angeordnet. Bevorzugt ist die gesamte Reckeinheit außerhalb des Reinraums angeordnet.

Bei einer weiteren vorteilhaften Ausführungsform weist die Vorrichtung eine Spüleinrichtung zum Spülen der zu expandierenden Kunststoffvorformlinge auf. Diese Spüleinrichtung kann dabei insbesondere die Kunststoffvorformlinge mit Sterilluft spülen.

Bei einer weiteren Ausführungsform weist die Vorrichtung eine Sterilisationseinrichtung zum Sterilisieren der Beaufschlagungseinrichtungen auf. Weiterhin ist bevorzugt eine Erwärmungseinrichtung vorgesehen, welche die Beaufschlagungseinrichtung erwärmt. So können beispielsweise die Blasdüsen erhitzt werden.

Bei einer weiteren vorteilhaften Ausführungsform weist die Vorrichtung eine Inspektionseinrichtung zum Inspizieren der Kunststoffvorformlinge oder Kunststoffbehältnisse auf. Besonders bevorzugt ist diese Inspektionseinrichtung vor der Ausschleuseeinrichtung angeordnet. Auf diese Weise können beispielsweise fehlerhafte Behältnisse erkannt und ausgeschleust werden.

Bei einer weiteren vorteilhaften Ausführungsform weist die Vorrichtung wenigstens eine Sensoreinrichtung auf, welche für den Reinraum charakteristische Parameter erfasst, wie etwa einen Luftdruck, eine Temperatur, eine Luftfeuchtigkeit, einen Anteil eines Sterilisationsmittels oder gleichen.

Bei einer weiteren vorteilhaften Ausführungsform ist eine derartige Inspektionseinrichtung außerhalb des Reinraums angeordnet. So kann beispielsweise eine Inspektion der Preformqualität am Einlauf in die Blasmaschine oder auch der gefertigten Behältnisse an deren Auslauf aus der Umformungseinrichtung vorgenommen werden. Besonders bevorzugt sind Elemente der Inspektionseinrichtung wie beispielsweise eine Kamera außerhalb des Reinraums angeordnet, insbesondere da diese teilweise nicht gegenüber Sterilisationsmitteln beständig sind.

Bei einer weiteren bevorzugten Ausführungsform ist eine Reinraumbegrenzung, wie etwa eine Schleusenwand aus einem transparenten Material hergestellt, so dass eine Inspektion durch diese transparente Wand erfolgen kann. Bevorzugt ist eine Reinraumbegrenzung in einem Bereich aus transparentem Material hergestellt, in dem eine Übergabe der Kunststoffvorformlinge von der Zuführeinrichtung an die Transporteinrichtung erfolgt.

Bei einer weiteren vorteilhaften Ausführungsform weist die Vorrichtung eine Sensoreinrichtung (innerhalb und/oder außerhalb des Reinraums) auf, um den Gehalt eines Sterilisationsmittels wie etwa H₂O₂ zu messen. Diese Sensoreinrichtung kann dabei ein Signal ausgeben, wenn ein bestimmter Wert überschritten wird. Auf diese Weise kann eine Sicherheit der Benutzer erhöht werden.

Besonders bevorzugt weist die Inspektionseinrichtung eine oder mehrere Bildaufnahmeeinrichtungen auf, welche die Kunststoffvorformlinge oder die Behältnisse inspizieren.

Weiterhin ist es möglich, dass eine Inspektionseinrichtung selbst zwar innerhalb des Reinraums angeordnet ist, aber eingekapselt ist, sodass diese gleichwohl vor Sterilisationsmitteln geschützt ist.

Bei einer weiteren vorteilhaften Ausführungsform weist die Umformungseinrichtung eine Fülleinrichtung zum Befüllen der Behältnisse auf und zwischen der Umformungseinrichtung und dieser Fülleinrichtung ist eine weitere Behandlungseinrichtung vorgesehen, welche die Behältnisse behandelt. Insbesondere handelt es sich bei dieser weiteren Vorrichtung um eine Transporteinrichtung, welche eine Teilung zwischen den Behältnissen während ihres Transports verändert. Daneben kann in diesem Bereich auch eine weitere Sterilisationseinrichtung vorgesehen sein, welche die Behältnisse sterilisiert. Daneben kann in diesem Bereich auch eine Ausstattungseinrichtung vorgesehen sein, welche die Behältnisse mit einem Aufdruck und/oder einem Etikett versieht. Weiterhin kann in diesem Bereich auch ein Inspektionseinrichtung vorgesehen sein welche die Behältnisse inspiziert.

Bei einer weiteren bevorzugten Ausführungsform weist die Vorrichtung eine weitere Sterilisationseinrichtung zum Sterilisieren von die Kunststoffvorformlinge behandelnden Elementen aufweist wobei bevorzugt diese Sterilisationseinrichtung an einer Position angeordnet ist, der keine Behandlung der Behältnisse stattfindet und/oder die weitere Sterilisationseinrichtung zwischen der Abführeinrichtung und der Zuführeinrichtung (der Umformungseinrichtung) angeordnet ist.

Dieser Bereich ist in besonderer Weise für die Sterilisation der die Kunststoffbehältnisse behandelnden Elemente geeignet, weil in diesem Bereich die Blasformen üblicherweise geöffnet sind und keine Behältnisse behandelt werden.

Genauer handelt es sich bei (im Falle einer Rundläufermaschine) insbesondere um denjenigen Bereich, in dem ein gefertigtes Behältnis aus den Blasformen entnommen wurde und noch kein weiterer Kunststoffvorformling in die Blasformen eingeführt wurde.

Weiterhin kann auch eine Kühleinrichtung vorgesehen sein, welche die Behälter kühlt, insbesondere die Behälterböden.

Bei einer weiteren vorteilhaften Ausführungsform weist die Vorrichtung eine Steuerungseinrichtung zum Steuern eines Gasdrucks innerhalb des Reinraums auf. Diese Steuerungseinrichtung kann dabei Drucksensoren, Feuchtigkeitssensoren, Temperatursensoren und dergleichen aufweisen. Besonders bevorzugt handelt es sich bei der Steuerungseinrichtung um eine Regeleinrichtung, welche den Druck innerhalb eines Reinraums regelt. Diese Regelungseinrichtung kann dabei auch Drücke in anderen Bereichen der Anlage mit einbeziehen.

Besonders bevorzugt weist die Vorrichtung eine Robotereinrichtung auf, welche dazu geeignet und bestimmt ist, Behandlungsvorgänge an wenigstens einem Element der Umformungseinrichtung durchzuführen.

Dabei sind besonders bevorzugt diese Behandlungsvorgänge aus einer Gruppe von Behandlungsvorgängen ausgewählt, welche Wechselvorgänge an diesen Elementen, Wechselvorgänge dieser Elemente, Reinigungsvorgänge an diesen Elementen, Sterilisationsvorgänge an diesen Elementen und dergleichen enthält.

Besonders bevorzugt ist das besagte Element der Umformungseinrichtung aus einer Gruppe von Elementen ausgewählt, welche Blasformen, Blasformteile, Blasdüsen, Reckstangen, Greifklammern, Haltedorne und dergleichen enthält.

Bei einer bevorzugten Ausführungsform ist die besagte Robotereinrichtung eine Wechseleinrichtung und insbesondere ein Wechselroboter. Besonders bevorzugt ist die Robotereinrichtung außerhalb des Reinraums angeordnet.

Bei einer bevorzugten Ausführungsform weist die Robotereinrichtung eine Greifeinrichtung zum Greifen des jeweiligen Elements auf. Bevorzugt ist auch die Greifeinrichtung selbst wechselbar sodass die Robotereinrichtung zum Wechseln mehrerer Elemente der einzelnen Umformungsstationen geeignet ist.

Bevorzugt ist die besagte Robotereinrichtung eine Mehrachsen-Robotereinrichtung.

Besonders bevorzugt ist die Robotereinrichtung zwischen mehreren Positionen der Vorrichtung positionierbar. Insbesondere ist die Robotereinrichtung in einem Bereich der Umformungseinrichtung und insbesondere in einem Bereich des Blasrads angeordnet.

Der Reinraum soll durch eine kontaminationsarme Atmosphäre definiert sein. Die kontaminationsarme Atmosphäre kann durch eine oder Kombinationen der folgenden Maßnahmen hergestellt werden:
Bei einer bevorzugten Ausführungsform wird die kontaminationsarme Atmosphäre der Vorrichtung (innerhalb eines Maschinenschutzes) unter einen Überdruck im Vergleich zur Umgebungsatmosphäre gesetzt, indem beispielsweise durch Feinfilter filtrierte Luft zumindest während der Produktion in den Raum eingeblasen wird.

Bei einer weiteren bevorzugten Ausführungsform sind wenigstens einige und bevorzugt alle Antriebe für verschiedenste Bewegungen der Kavität (Blasformeinrichtung, also Blasform bzw. Formträger) außerhalb des Reinraums angeordnet, so beispielsweise die Antriebe für das Öffnen und Schließen der Kavität und/oder die Antriebe für das Bewegen einer Reckstange und/oder die Antriebe für ein Anheben oder Senken eines Behältnisses und/oder die Antriebe für die Bewegung einer Blas- oder Fülldüse (bzw. Beaufschlagungsvorrichtung).

Bei einer weiteren bevorzugten Ausführungsform wird- die innere Wandung des (Rein)Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig).

Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.

Bei einer weiteren bevorzugten Ausführungsform ist oder wird die kontaminationsarme Umgebung gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Besonders bevorzugt werden die Behältnisse bzw. Vorformlinge vor einem Einbringen in die kontaminationsarme Atmosphäre sterilisiert

Bei einer weiteren bevorzugten Ausführungsform ist der Reinraum durch eine Wandung begrenzt, welche wenigstens einen gekrümmten Abschnitt und/oder eine Biegung aufweist welche(r) bevorzugt zwischen dem Bereich, in dem die Kunststoffvorformlinge während ihrer Expansion außerhalb des Reinraums transportiert werden einerseits und der Zuführeinrichtung und/oder der Abführeinrichtung andererseits angeordnet ist. Durch diesen gekrümmten Bereich wird vorteilhaft erreicht, dass der Streckenabschnitt, in dem die Kunststoffvorformling außerhalb des Reinraums, aber noch nicht innerhalb der Blasform transportiert werden, verkürzt wird.

Die vorliegende Erfindung ist weiterhin auf ein Verfahren zum Umformen von Kunststoffvorformlingen zu Kunststoffbehältnissen gerichtet, wobei eine Transporteinrichtung die umzuformenden Kunststoffvorformlinge entlang eines vorgegebenen Transportpfads transportiert und wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen und insbesondere gasförmigen Medium zu den Kunststoffbehältnissen umgeformt werden und die Umformungsstationen jeweils Beaufschlagungseinrichtungen aufweisen, welche die Kunststoffvorformlinge mit einem fließfähigen Medium beaufschlagen Weiterhin transportiert eine Zuführeinrichtung die Kunststoffvorformlinge der Transporteinrichtung zu und eine Abführeinrichtung führt die gefertigten Behältnisse von der Transporteinrichtung ab. Daneben weist die Vorrichtung einen Reinraum aufweist, innerhalb dessen die Kunststoffvorformlinge wenigstens abschnittsweise transportiert werden. Insbesondere werden die Kunststoffvorformlinge in diesem Reinraum der Transporteinrichtung zugeführt und/oder die umgeformten Behältnisse innerhalb dieses Reinraums von der Transporteinrichtung abgeführt.

Vorteilhaft weist die Vorrichtung eine Ausschleuseeinrichtung auf, welche (einzelne) Kunststoffvorformlinge oder Kunststoffbehältnisse aus dem Transportpfad ausschleust.

Es wird daher auch verfahrensseitig vorgeschlagen, dass bevorzugt eine Ausschleusung von insbesondere fehlerhaften Kunststoffvorformlingen oder Kunststoffbehältnissen an wenigstens einer Position entlang des gesamten Transportpfads der Kunststoffvorformlinge erfolgt.

Bei einem bevorzugten Verfahren werden die Kunststoffvorformlinge wenigstens zeitweise während ihrer Expansion außerhalb des Reinraums transportiert.

Bei einem bevorzugten Verfahren werden die Kunststoffvorformlinge oder Kunststoffbehältnisse während ihres Transports von der Zuführeinrichtung zu der Abführeinrichtung sterilisiert und/oder desinfiziert und/oder gereinigt. Dabei es weiterhin möglich, dass die Kunststoffvorformlinge auch sterilisiert werden, bevor sie die Umformungseinrichtung erreichen. Es wird jedoch zusätzlich vorgeschlagen, dass eine weitere Sterilisation und/oder Reinigung unter Desinfektion auf dem Transportpfad der Kunststoffvorformlinge während deren Expansion und/oder während der Zuführung der Kunststoffvorformlinge in die Blasformen und/oder während der Entnahme der Kunststoffbehältnisse von den Blasformen erfolgt.

Bei einem weiteren vorteilhaften Verfahren werden die Kunststoffvorformlinge oder Kunststoffbehältnisse inspiziert und bevorzugt wird in Reaktion auf eine Inspektion eine Ausschleusung einzelner Kunststoffvorformlinge oder Kunststoffbehältnisse durchgeführt.

Bevorzugt wird den Kunststoffvorformlingen wenigstens zeitweise während ihrer Expansion ein Sterilisationsmittel zugeführt. Dies kann beispielsweise während eines Vorblasprozesses erfolgen, in dem die Kunststoffvorformlinge mit einem Vorblasdruck beaufschlagt werden. Bevorzugt werden die Kunststoffvorformlinge innerhalb des Reinraums sterilisiert und/oder mit Sterilluft gespült.

Bevorzugt werden die Kunststoffvorformlinge inspiziert.

Bei einem weiteren bevorzugten Verfahren wird ein Bereich, in welchem die Kunststoffvorformlinge und/oder die Kunststoffbehältnisse während ihres Transports von der Zuführeinrichtung zu der Abführeinrichtung transportiert werden, mit einer geringen Konzentration an Sterilisationsmedium beaufschlagt.

Bei einem weiteren bevorzugten Verfahren werden Behandlungselemente, welche die Kunststoffvorformlinge behandeln oder der Transporteinrichtung, welche die Kunststoffvorformlinge transportiert (insbesondere das sog. Blasrad) wenigstens zeitweise mit einem Sterilisationsmedium beaufschlagt.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine schematische Darstellung einer Vorrichtung mit einer teilweise mittdrehenden Reinraumgrenze;
- Fig. 3: eine schematische Darstellung einer Vorrichtung mit einer stehenden Reinraumgrenze;
- Fig. 4: eine Schnittdarstellung der Vorrichtung senkrecht auf die in Fig. 3 gezeigte Schnittlinie;
- Fig. 5: eine schematische Darstellung einer Vorrichtung mit einer feststehenden Reinraumgrenze;
- Fig. 6: eine Schnittdarstellung der Vorrichtung senkrecht auf die in Fig. 5 gezeigte Schnittlinie;
- Fig. 7: Eine Darstellung der Vorrichtung mit einem Transportkorridor; und
- Fig. 8: eine Darstellung der Vorrichtung mit Reinraumgrenze um einen Transportstern.

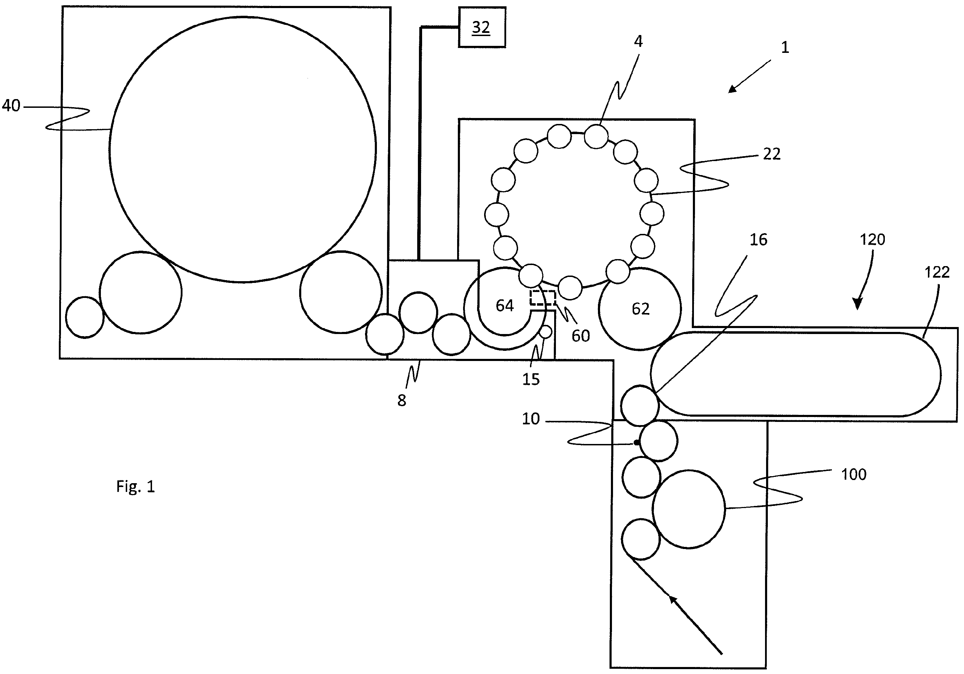

Fig. 1 zeigt eine schematische Darstellung einer erfindungsgemäßen Vorrichtung 1. Diese weist einen drehbaren Transportträger 22, insb. ein sog. Blasrad auf, an dem eine Vielzahl von Umformungsstationen 4 angeordnet ist.

Diese Umformungsstationen weisen jeweils Blassformen auf, die an Blasformträgern angeordnet sind. Jede dieser Umformungsstationen weist dabei bevorzugt eine Reckeinheit auf, die wiederum eine Reckstange aufweist, welche in die zu expandierenden Kunststoffvorformlinge einführbar ist, um diese in deren Längsrichtung zu dehnen.

Das Bezugszeichen 62 kennzeichnet eine Zuführeinrichtung, insbesondere einen Zuführstern, welcher den einzelnen Umformungsstationen 4 die zu expandierenden Kunststoffvorformlinge 10 zuführt. Das Bezugszeichen 64 kennzeichnet eine Abführeinrichtung, welche die umgeformten Behältnisse 15 von der Umformungseinrichtung abführt.

Das Bezugszeichen 60 kennzeichnet eine Ausschleuseeinrichtung, die zum Ausschleusen von Kunststoffbehältnissen dient, insbesondere von fehlerhaft gefertigten Kunststoffbehältnissen.

Diese Ausschleuseeinrichtung ist bevorzugt in einem Bereich angeordnet, in dem die Kunststoffvorformlinge von dem Transportträger an die Abführeinrichtung übergeben werden.

Das Bezugszeichen 8 kennzeichnet einen Reinraum, welcher bevorzugt Bestandteile der Vorrichtung 1 umgibt. Man erkennt, dass die Abführeinrichtung 64 wenigstens teilweise innerhalb dieses Reinraums angeordnet ist.

Bevorzugt ist jedoch der Transportträger 22 nicht innerhalb des Reinraums 8 angeordnet. Dies bedeutet, dass die Umformung der Kunststoffvorformlinge bevorzugt nicht innerhalb des Reinraums 8 stattfindet.

Das Bezugszeichen 32 kennzeichnet eine Sterilluftzuführungseinrichtung, mittels derer dem Reinraum Sterilluft zugeführt werden kann.

Das Bezugszeichen 40 kennzeichnet eine Fülleinrichtung, welche bevorzugt die umgeformten Behältnisse mit einer Flüssigkeit und insbesondere einem Getränk befüllt.

Das Bezugszeichen 120 kennzeichnet eine Erwärmungseinrichtung, welche die umzuformenden Kunststoffvorformlinge erwärmt. Diese Erwärmungseinrichtung weist bevorzugt eine Transporteinrichtung 122 auf, welche die Kunststoffvorformlinge transportiert.

Daneben weist die Erwärmungseinrichtung bevorzugt stationär angeordnete Heizeinrichtungen auf, an denen die Kunststoffvorformlinge zum Zweck ihrer Erwärmung vorbeitransportiert werden.

Das Bezugszeichen 100 kennzeichnet eine Sterilisationseinrichtung, welche die Kunststoffvorformlinge noch vor ihrem Einlauf in die Erwärmungseinrichtung 120 sterilisiert.

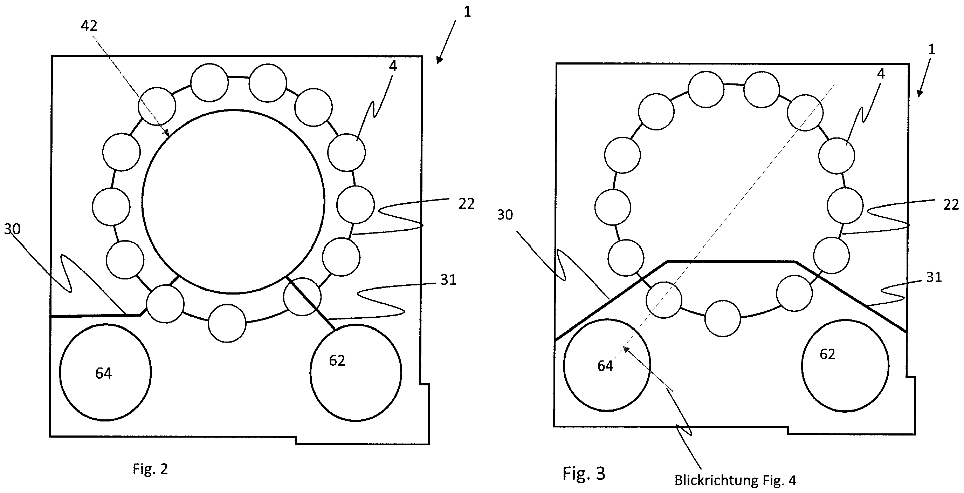

Fig. 2 zeigt eine Darstellung der eigentlichen Umformungseinrichtung. Dabei ist wieder der drehbare Transportträger mit den daran angeordneten Umformungsstationen erkennbar.

Die Bezugszeichen 31, 30 und 42 kennzeichnen eine Reinraumgrenze, welche hier teilweise mitdrehend ausgebildet ist.

Während des Umformungsvorgangs wird wie oben erwähnt, eine Blasdüse auf die Kunststoffvorformlinge aufgesetzt um diese mit Druckluft und bevorzugt Sterilluft zu beaufschlagen. Weiterhin wird während des Expansionsvorgangs eine Reckstange in die Kunststoffvorformlinge eingeführt. Nach dem Umformungsprozess werden sowohl die Blasdüse als auch die Reckstange wieder zurückgezogen.

Bei einem bevorzugten Verfahren werden die Blasdüse und/oder die Reckstange bevorzugt erst abgehoben bzw. zurückgezogen, wenn ein umgeformtes Behältnis bzw. die dieses Behältnis erzeugende Umformungsstation die Sterilraumgrenze 30 durchquert hat. Auf diese Weise wird die Gefahr einer Verkeimung des umgeformten Behältnisses verringert.

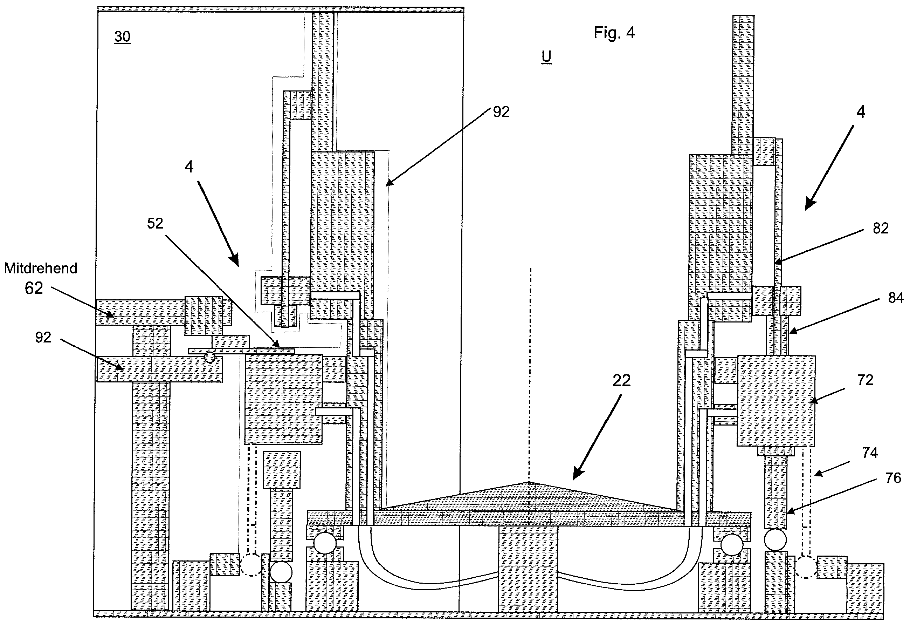

Fig. 3 zeigt eine Ausgestaltung mit einer feststehenden Reinraumgrenze 30, 31. Die schräge gerade Linie veranschaulicht dabei die Blickrichtung für Fig. 4. Bei der in Fig. 3 gezeigten Situation sind bevorzugt sowohl die Zuführeinrichtung 62 als auch die Abführeinrichtung 64 vollständig innerhalb des Reinraums.

Fig. 4 zeigt eine Schnittdarstellung auf die in Fig. 3 gezeigte Linie. Hier sind zwei Umformungsstationen 4 gezeigt, die an dem Blasformträger 22 angeordnet sind. In der rechten Umformungsstation wird gerade ein Kunststoffvorformling umgeformt.

Das Bezugszeichen 82 kennzeichnet eine Reckstange und das Bezugszeichen 84 eine Beaufschlagungseinrichtung, welche hier in einer unteren Position dargestellt ist, in der sie (insbesondere dichtend) auf dem Kunststoffvorformling aufsitzt. Auch die Reckstange ist hier in einer unteren Position.

Das Bezugszeichen 72 zeigt einen Formträger, an dem ein Blasformteil angeordnet ist. Der Formträger ist hier in einer geschlossenen Stellung. Das Bezugszeichen 74 kennzeichnet einen Verriegelungsmechanismus, der zum Verriegeln der Blasformträger dient.

Das Bezugszeichen 76 kennzeichnet einen Träger für eine Bodenform, welche einen Bestandteil der gesamten Blasform bildet. Dieser Träger ist hier in einer oberen Stellung, in der die Blasform geschlossen ist.

Das Bezugszeichen 30 kennzeichnet wiederum die Reinraumgrenze. Das Bezugszeichen 92 kennzeichnet ein in dieser Reinraumgrenze ausgebildetes Fenster, durch welche die Blasstation in den Reinraum eintreten kann.

Das Bezugszeichen 52 kennzeichnet eine Greifklammer zum Greifen des umgeformten Behältnisses. Diese Greifklammer ist an der Abführeinrichtung 62 angeordnet bzw. ein Bestandteil derselben. Das Bezugszeichen 94 kennzeichnet eine feststehende Kurvenscheibe. Dies kann beispielsweise zum Öffnen und schließen der Greifklammer 52 dienen.

Bei der linken Umformungsstation sind in der gezeigten Situation sowohl die Reckstange als auch die Beaufschlagungseinrichtung bzw. Blasdüse in eine obere Position gefahren.

Die Blasform ist in dieser Situation offen und die Verriegelungseinrichtung in einem entriegelten Zustand (in dem die Blasform geöffnet werden kann. Auf der linken Seite in Fig. 4 ist damit die Entnahme der Behältnisse gezeigt.

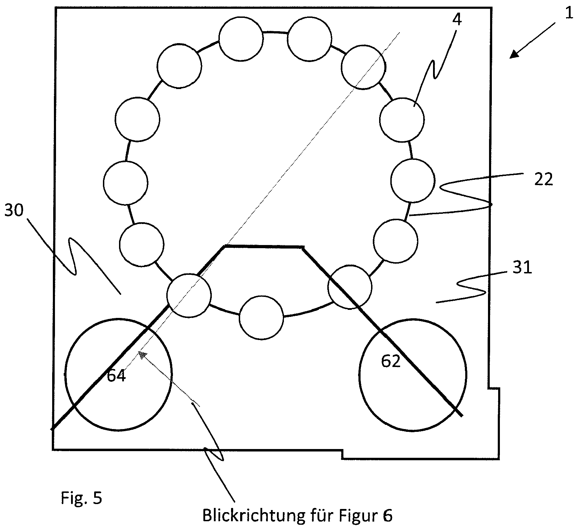

Fig. 5 zeigt eine Ausgestaltung mit einer feststehenden Reinraumgrenze 30, 31. Die schräge gerade Linie veranschaulicht dabei die Blickrichtung für Fig. 4. Bei der in Fig. 3 gezeigten Situation sind bevorzugt sowohl die Zuführeinrichtung 62 als auch die Abführeinrichtung 64 nur teilweise innerhalb des Reinraums.

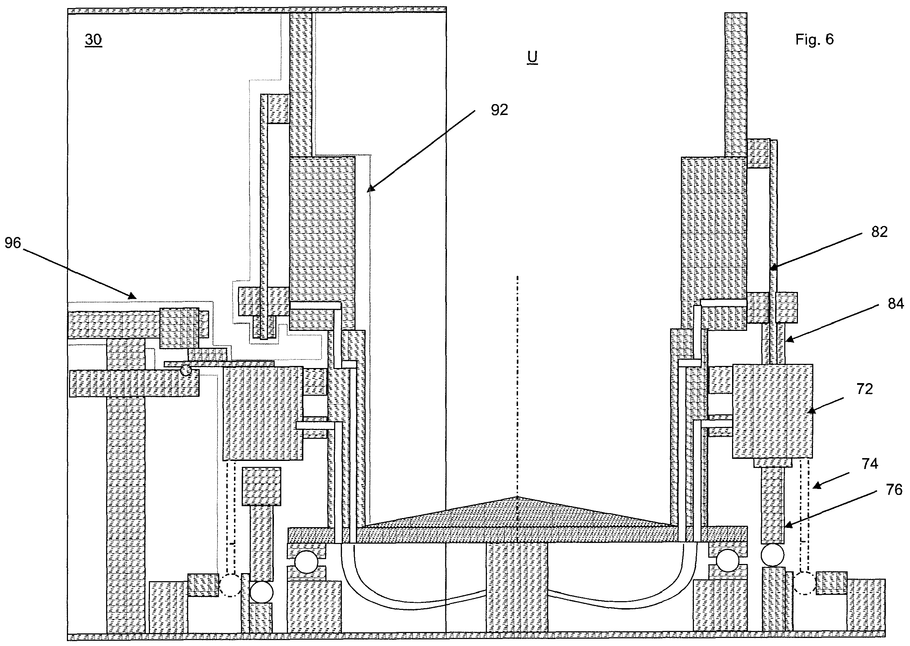

Fig. 6 zeigt eine Schnittdarstellung auf die in Fig. 3 gezeigte Linie. Hier sind zwei Umformungsstationen 4 gezeigt, die an dem Blasformträger 22 angeordnet sind. In der rechten Umformungsstation wird gerade ein Kunststoffvorformling umgeformt. Zu den weiteren Details der Umformungsstation wird auf Fig. 4 verwiesen.

Auch hier ist wieder die Reinraumgrenze 30 dargestellt. Wie auch bei der in Fig. 4 gezeigten Ausgestaltung gezeigt, kann die Reinraumgrenze durch eine Wandung ausgebildet sein.

Im Gegensatz zu der in Fig. 4 gezeigten Situation ist jedoch hier auch die Abführeinrichtung in dem Fenster angeordnet, d.h. ein Teil der Abführeinrichtung befindet sich innerhalb des Reinraums und ein Teil befindet sich außerhalb desselben.

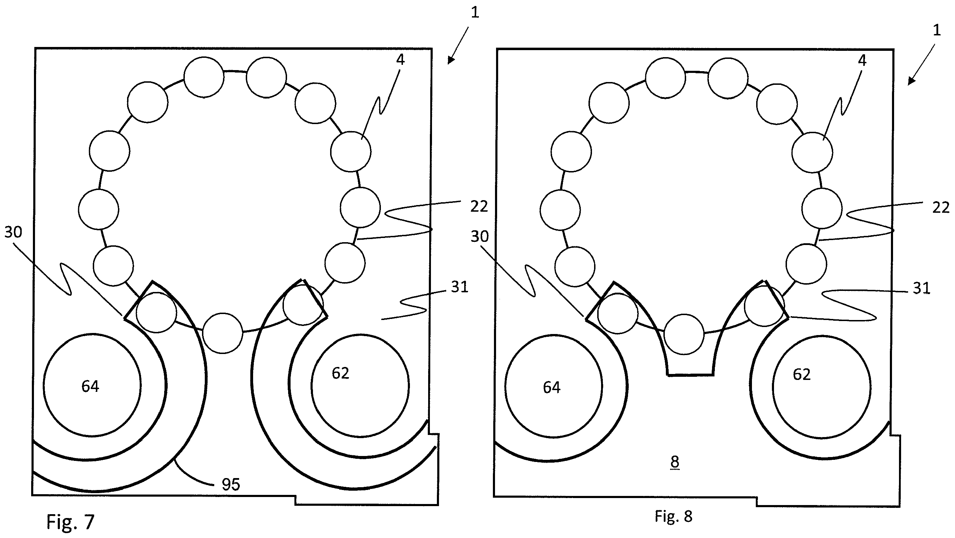

Bei der in Fig. 7 gezeigten Situation ist ein Korridor 95 vorgesehen, der für den Durchgang der Umformungsstationen bzw. der Blasformen und bevorzugt auch für den Durchgang eines Schwenkarms geöffnet ist. Dabei ist auch hier die Reinraumgrenze 30, 31 feststehend.

Bei der in Fig. 8 gezeigten Situation ist ebenfalls eine feststehende Reinraumgrenze 30, 31 vorgesehen, welche hier um die Transportsterne 62, 64 verläuft. Auch hier ist ein Korridor gebildet, der für den Durchgang der Umformungsstationen bzw. Blasformen und/oder den Schwenkarm geöffnet ist.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Umformen von Kunststoffvorformlingen (10) zu Kunststoffbehältnissen (15) mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen und wobei die Vorrichtung (1) eine Zuführeinrichtung (62) aufweist, um der Transporteinrichtung (2) umzuformende Kunststoffvorformlinge (10) zuzuführen sowie eine Abführeinrichtung (64), um umgeformte Behältnisse (15) von der Transporteinrichtung (2) abzuführen, und wobei die Vorrichtung einen Reinraum (8) aufweist, innerhalb dessen die Kunststoffvorformlinge (10) oder die Kunststoffbehältnisse (10) wenigstens abschnittsweise transportiert werden **dadurch gekennzeichnet, dass**
der Reinraum derart ausgestaltet ist, dass die Kunststoffvorformlinge wenigstens zeitweise während ihrer Expansion außerhalb des Reinraums transportiert werden.

2. Vorrichtung nach Anspruch 1,
**dadurch gekennzeichnet, dass**
der Reinraum derart ausgebildet ist, dass die von der Zuführeinrichtung (62) und/oder der Abführeinrichtung (64) transportierten Kunststoffvorformlinge durch diesen Reinraum (8) transportiert werden und/oder ein Bereich außerhalb des Reinraums, insbesondere der Bereich, in welchem die Umformungsstationen angeordnet sind, mit einer geringen Konzentration an Sterilisationsmedium beaufschlagbar ist.

3. Vorrichtung nach wenigstens einem der vorangegangenen Ansprüche,
**dadurch gekennzeichnet, dass**
die Vorrichtung (1) eine Ausschleuseeinrichtung (60) aufweist, um Kunststoffvorformlinge oder Kunststoffbehältnisse aus dem Transportpfad auszuschleusen wobei bevorzugt die Ausschleuseeinrichtung außerhalb des Reinraums angeordnet ist.

4. Vorrichtung nach wenigstens einem der vorangegangenen Ansprüche,
**dadurch gekennzeichnet, dass**
die Vorrichtung eine Sterilisationseinrichtung zum Sterilisieren und/oder eine Reinigungseinrichtung zum Reinigen der Kunststoffvorformlinge und/oder der Kunststoffbehältnisse aufweist wobei bevorzugt die Sterilisationseinrichtung und/oder Reinigungseinrichtung stromaufwärts der Umformungseinrichtung und besonders bevorzugt stromaufwärts der Erwärmungseinrichtung angeordnet ist.

5. Vorrichtung nach dem vorangegangenen Anspruch,
**dadurch gekennzeichnet, dass**
die Reinigungseinrichtung an dem Einlaufstern zur Erwärmungseinrichtung angeordnet ist.

6. Vorrichtung nach wenigstens einem der vorangegangenen Ansprüche,
**dadurch gekennzeichnet, dass**
die Vorrichtung eine weitere Sterilisationseinrichtung zum Sterilisieren von die Kunststoffvorformlinge behandelnden Elementen aufweist wobei bevorzugt diese Sterilisationseinrichtung an einer Position angeordnet ist, der keine Behandlung der Behältnisse stattfindet und/oder die weitere Sterilisationseinrichtung zwischen der Abführeinrichtung (64) und der Zuführeinrichtung angeordnet ist.

7. Vorrichtung nach wenigstens einem der vorangegangenen Ansprüche,
**dadurch gekennzeichnet, dass**
die Vorrichtung eine Inspektionseinrichtung zum Inspizieren der Kunststoffvorformlinge und/oder der Kunststoffbehältnisse (15) aufweist.

8. Vorrichtung nach wenigstens einem der vorangegangenen Ansprüche,
**dadurch gekennzeichnet, dass**
der Umformungseinrichtung eine Fülleinrichtung zum Befüllen der Behältnisse nachgeordnet ist und zwischen der Umformungseinrichtung und der Fülleinrichtung eine weitere Behandlungseinrichtung vorgesehen ist, welche die Behältnisse behandelt.

9. Vorrichtung nach wenigstens einem der vorangegangenen Ansprüche,
**dadurch gekennzeichnet, dass**
die Vorrichtung eine Steuerungseinrichtung zum Steuern eines Gasdrucks innerhalb eines Reinraums aufweist.

10. Vorrichtung nach wenigstens einem der vorangegangenen Ansprüche,
**dadurch gekennzeichnet, dass**
die Vorrichtung eine Robotereinrichtung aufweist, welche dazu geeignet und bestimmt ist, Behandlungsvorgänge an wenigstens einem Element der Umformungseinrichtung durchzuführen.

11. Vorrichtung nach dem vorangegangenen Anspruch,
**dadurch gekennzeichnet, dass**
die Behandlungsvorgänge aus einer Gruppe von Behandlungsvorgängen ausgewählt sind, welche Wechselungen dieser Elemente, Reinigungsvorrichtungen dieser Elemente, Sterilisationsvorgänge dieser Elemente und dergleichen enthält und/oder das Element der Umformungseinrichtung aus einer Gruppe von Elementen ausgewählt ist, welche Blasformen, Blasformteile, Blasdüsen, Reckstangen, Greifklammern, Haltedorne und dergleichen enthält.

12. Vorrichtung nach wenigstens einem der vorangegangenen Ansprüche,
**dadurch gekennzeichnet, dass**
der Reinraum durch eine Wandung begrenzt ist, welche wenigstens einen gekrümmten Abschnitt und/oder eine Biegung aufweist welche bevorzugt zwischen dem Bereich, in dem die Kunststoffvorformlinge während ihrer Expansion außerhalb des Reinraums transportiert werden einerseits und der Zuführeinrichtung (62) und/oder der Abführeinrichtung (64) andererseits angeordnet ist.

13. Verfahren zum Umformen von Kunststoffvorformlingen (10) zu Kunststoffbehältnissen (15) wobei eine Transporteinrichtung (2) die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umgeformt werden und die Umformungsstationen (4) jeweils Beaufschlagungseinrichtungen (84) aufweisen, welche die Kunststoffvorformlinge (10) mit dem fließfähigen Medium beaufschlagen und wobei die Vorrichtung eine Zuführeinrichtung (62) aufweist, welche der Transporteinrichtung (2) umzuformende Kunststoffvorformlinge (10) zuführt sowie eine Abführeinrichtung (64), umgeformte Behältnisse (15) von der Transporteinrichtung (2) abführt, und wobei die Vorrichtung einen Reinraum (8) aufweist, innerhalb dessen die Kunststoffvorformlinge (10) wenigstens abschnittsweise transportiert werden
**dadurch gekennzeichnet, dass**
der Reinraum derart ausgestaltet ist, dass die Kunststoffvorformlinge wenigstens zeitweise während ihrer Expansion außerhalb des Reinraums transportiert werden.

14. Verfahren nach dem vorangegangenen Anspruch,
die Vorrichtung (1) eine Ausschleuseeinrichtung (60) aufweist, welche Kunststoffvorformlinge oder Kunststoffbehältnisse aus dem Transportpfad ausschleust und/oder die Kunststoffvorformlinge und/oder Kunststoffbehältnisse inspiziert werden und bevorzugt in Reaktion auf diese Inspektion eine Ausschleusung einzelner Kunststoffvorformlinge oder Kunststoffbehältnisse erfolgt.

15. Verfahren nach den vorangegangenen Ansprüchen,
**dadurch gekennzeichnet, dass**
der Bereich in welchem die Kunststoffvorformlinge und/oder die Kunststoffbehältnisse während ihres Transports von der Zuführeinrichtung zu der Abführeinrichtung transportiert werden, mit einer geringen Konzentration an Sterilisationsmedium beaufschlagt wird.
